# EUROPÄISCHE PATENTSCHRIFT

(11) **EP 1 561 057 B1**
(45) Veröffentlichungstag und Bekanntmachung des Hinweises auf die Patenterteilung: **22.02.2006**
(21) Anmeldenummer: 03773467.0
(22) Anmeldetag: 30.09.2003
(51) Int. Cl.: F16K 25/00

(54) **VENTIL**
VALVE
SOUPAPE

(30) Priorität: 04.11.2002 DE 10251293
(43) Veröffentlichungstag der Anmeldung: 10.08.2005
(73) Patentinhaber: SIEMENS AKTIENGESELLSCHAFT, 80333 München (DE)
(72) Erfinder: HANNEWALD, Thomas, 64347 Griesheim (DE)
(86) Internationale Anmeldenummer: PCT/DE2003/003261
(87) Internationale Veröffentlichungsnummer: WO 2004/042261

(56) Entgegenhaltungen:
- DE-A- 10 041 579
- DE-A- 10 050 393
- US-A- 4 010 775
- US-A- 4 491 300
- US-A- 5 377 713
- US-A- 6 165 272

## Beschreibung

Die Erfindung bezieht sich auf ein Ventil sowie auf eine Verwendung des Ventils. Ventile, beispielsweise für Gaskanäle, sind bekannt. Sie bestehen oftmals aus einem Aluminiumgehäuse mit einem Ventilsitz, in welchem eine drehbar angeordnete Klappe zum Verschließen des Gaskanals angeordnet ist. Zur Vermeidung von Leckluft wird die Klappe dabei mit einer außen umlaufenden Kolbendichtung versehen. Aus Gründen der erforderlichen Verschleißfestigkeit wird der Ventilsitz in der Regel ringförmig aus Stahl gefertigt. Sofern die durch das Ventil geleiteten Gase Temperaturen über 400° aufweisen und in ihrer Temperatur dazu noch stark schwanken, kommt es bei der angeordneten Klappe und dem Ventilsitz zu unterschiedlichen Ausdehnungen, so dass bei der Fertigung zwischen der Klappe und dem Ventilsitz ein gewisser Ringspalt erforderlich ist. Die dadurch im Betrieb sich einstellende Leckluft kann in ihrer Menge nur durch sehr aufwändige Fertigungsverfahren und Einstellungen von geringen Toleranzen vermindert werden.

Der Erfindung liegt daher die Aufgabe zugrunde, ein Ventil zu schaffen, bei dem die Bildung von Leckluft weitgehend vermieden werden kann. Ein sicheres Verschließen des Gaskanals soll somit auch bei höheren und schwankenden Temperaturen des Gases weitgehend gewährleistet sein.

Die der Erfindung zugrundeliegende Aufgabe wird durch ein Ventil gelöst, das aus einem Gehäuse aus Aluminium mit einem Ventilsitz aus Aluminium für eine Klappe, die an einer Antriebswelle drehbar gelagert ist und eine umlaufende Kolbendichtung aufweist, besteht, bei dem der Ventilsitz auf seiner, der Klappe zugewandten Fläche eine metallische Beschichtung aufweist, deren Schichtdicke im Bereich von 5 bis 30 µm liegt und die eine Temperaturbeständigkeit im Bereich von 500 bis 800° C aufweist. Der Ventilsitz besteht aus Aluminium und kann daher auch Teil des Gehäuses aus Aluminium sein. Die Klappe besteht in der Regel aus Stahl. Bei der umlaufenden Kolbendichtung handelt es sich in der Regel ebenfalls um einen Stahlring, der aus Gründen der Nachgiebigkeit eine Unterbrechung aufweist und der in einer Nut, die in der Klappe umlaufend verläuft, gelagert ist. Beim Verschließen des Gaskanals durch das Ventil wird dieser Stahlring in die Mitte zur Klappe gedrückt und liegt dann direkt am Ventilsitz an. Es hat sich in überraschender Weise gezeigt, dass die Bildung von Leckluft nahezu vollständig vermieden werden kann, wenn der Ventilsitz aus Aluminium gefertigt wird und auf seiner, der Klappe zugewandten Fläche die metallische Beschichtung aufweist. Dabei ist besonders vorteilhaft, dass auf die Anordnung des relativ teuren Stahlringes als Ventilsitz verzichtet werden kann. Da der Ventilsitz aus Aluminium gefertigt ist, das sich bei höheren. Temperaturen stärker ausdehnt als die Klappe aus Stahl, kann der erforderliche Ringspalt zwischen der Klappe und dem Ventilsitz minimiert werden. Auf eine relativ aufwändige Einhaltung von engen Toleranzen kann bei der Fertigung somit vorteilhaft verzichtet werden.

Eine bevorzugte Ausgestaltung der Erfindung besteht darin, dass die Schichtdicke im Bereich von 20 bis 25 µm liegt. Durch diese Maßnahme lässt sich die Menge an Leckluft nochmals verkleinern.

Gemäß einer weiteren bevorzugten Ausgestaltung der Erfindung besteht die metallische Beschichtung aus Nickel oder einer Nickelverbindung. Nickel oder Nickelverbindungen lassen sich besonders vorteilhaft auf Aluminiumflächen aufbringen und dort fixieren.

Eine weitere Ausgestaltung der Erfindung besteht darin, dass die metallische Beschichtung aus Nickel-Silizium-Karbid besteht. Nickel-Silizium-Karbid wird handelsüblich unter dem Namen Nikasil vertrieben. Die Wärmeableitung in dem Ventilsitz aus Aluminium ist dabei sehr gut und eine Abnutzung des Ventilsitzes aus Aluminium nahezu ausgeschlossen, da Nikasil eine relativ hohe Härte aufweist.

Nach einer weiteren bevorzugten Ausgestaltung der Erfindung besteht die metallische Beschichtung aus Aluminiumoxid. Aluminiumoxid lässt sich ebenfalls relativ einfach auf die Aluminiumfläche des Ventilsitzes aufbringen.

Eine weitere bevorzugte Ausgestaltung der Erfindung besteht darin, dass der Ventilsitz einen Ring aus Aluminium als Basiskörper aufweist, der in das Gehäuse aus Aluminium eingepresst ist. Dabei ist vorteilhaft, dass der Ring aus Aluminium als Basiskörper außerhalb des Gehäuses mit der metallischen Beschichtung beschichtet werden kann. Der beschichtete Ring aus Aluminium lässt sich dann relativ einfach in das Gehäuse aus Aluminium einpressen. Durch diese Maßnahme wird die Herstellung des Ventils somit vereinfacht.

Gegenstand der Erfindung ist schließlich noch die Verwendung des Ventils als Gasrückführventil eines Kraftfahrzeuges. Die hohen und schwankenden Temperaturen der durch das Gasrückführventil geleiteten Gase führen bei Gasrückführventilen herkömmlicher Bauart oft zu einem nachteiligen Verklemmen der Klappe im Ventil, was durch den Einsatz des erfindungsgemäßen Ventils in besonders vorteilhafter Weise vermieden wird.

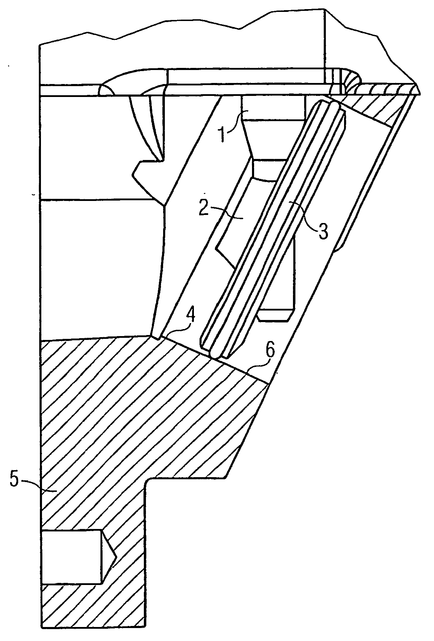

Die Erfindung wird nachfolgend anhand der Zeichnung (Fig.) näher und beispielhaft erläutert.

Fig. zeigt das Ventil im Querschnitt.

In Fig. ist das Ventil im Querschnitt dargestellt. Das Ventil besteht aus einem Gehäuse 5 aus Aluminium mit einem Ventilsitz 6 aus Aluminium für eine Klappe 2, die an einer Antriebswelle 1 drehbar gelagert ist und eine umlaufende Kolbendichtung 3 aufweist. Der Ventilsitz 6, der hier Teil des Gehäuses 5 ist, weist auf seiner, der Klappe 2 zugewandten Fläche eine metallische Beschichtung 4 auf, deren Schichtdicke im Bereich von 5 bis 30 µm liegt und die eine Temperaturbeständigkeit im Bereich von 500 bis 800° C aufweist. Dabei ist es auch möglich, dass der Ventilsitz 6 einen Ring aus Aluminium als Basiskörper aufweist (nicht dargestellt), der mit der metallischen Beschichtung in das Gehäuse 5 aus Aluminium eingepresst ist. Das Ventil eignet sich in besonderer Weise als Gasrückführventil eines Kraftfahrzeuges.

## Patentansprüche

1. Ventil, das aus einem Gehäuse (5) aus Aluminium mit einem Ventilsitz (6) aus Aluminium für eine Klappe (2), die an einer Antriebswelle (1) drehbar gelagert ist und eine umlaufende Kolbendichtung (3) aufweist, besteht, bei dem der Ventilsitz (6) auf seiner, der Klappe (2) zugewandten Fläche eine metallische Beschichtung (4) aufweist, deren Schichtdicke im Bereich von 5 bis 30 µm liegt und die eine Temperaturbeständigkeit im Bereich von 500 bis 800° C aufweist.

2. Ventil nach Anspruch 1, bei dem die Schichtdicke im Bereich von 20 bis 25 µm liegt.

3. Ventil nach Anspruch 1 oder Anspruch 2, bei dem die metallische Beschichtung (4) aus Nickel oder einer Nickelverbindung besteht.

4. Ventil nach Anspruch 3, bei dem die metallische Beschichtung (4) aus Nickel-Silizium-Karbid besteht.

5. Ventil nach Anspruch 1 oder Anspruch 2, bei dem die metallische Beschichtung (4) aus Aluminiumoxid besteht.

6. Ventil nach einem der Ansprüche 1 bis 5, bei dem der Ventilsitz (6) einen Ring aus Aluminium als Basiskörper aufweist, der in das Gehäuse (5) aus Aluminium eingepresst ist.

7. Verwendung des Ventils nach einem der Ansprüche 1 bis 6 als Gasrückführventil eines Kraftfahrzeuges.

## Revendications

1. Soupape se composant d'un corps (5) en aluminium comportant un siège de soupape (6) en aluminium pour un clapet (2), qui est monté en rotation sur un arbre de commande (1) et qui comporte une garniture de piston (3) périphérique, où le siège (6) de la soupape comporte, sur sa surface tournée vers le clapet (2), un revêtement métallique (4) dont l'épaisseur se situe dans la plage de 5 à 30 µm et qui résiste à la température dans la plage de 500 à 800°C.

2. Soupape selon la revendication 1 dans laquelle l'épaisseur du revêtement se situe dans la plage de 20 à 25 µm.

3. Soupape selon la revendication 1 ou la revendication 2 dans laquelle le revêtement métallique (4) est en nickel ou en alliage de nickel.

4. Soupape selon la revendication 3 dans laquelle le revêtement métallique (4) est en carbure de nickel silicium.

5. Soupape selon la revendication 1 ou la revendication 2 dans laquelle le revêtement métallique (4) est en oxyde d'aluminium.

6. Soupape selon l'une des revendications 1 à 5 dans laquelle le siège (6) de la soupape comporte, comme corps de base, une bague en aluminium qui est enfoncée dans le corps de soupape (5) en aluminium.

7. Utilisation de la soupape selon l'une des revendications 1 à 6 en tant que soupape de recyclage des gaz dans un véhicule automobile.

## Claims

1. Valve which consists of an aluminium housing (5) with an aluminium valve seat (6) for a flap (2) which is rotatably mounted on a drive shaft (1) and has an encircling piston seal (3), in which valve the valve seat (6), on its surface facing the flap (2), has a metallic coating (4), the layer thickness of which is within the range of 5 to 30 µm and which has a temperature resistance within the range of 500 to 800°C.

2. Valve according to Claim 1, in which the layer thickness is within the range of 20 to 25 µm.

3. Valve according to Claim 1 or Claim 2, in which the metallic coating (4) is made of nickel or a nickel compound.

4. Valve according to Claim 3, in which the metallic coating (4) is made of nickel-silicon carbide.

5. Valve according to Claim 1 or Claim 2, in which the metallic coating (4) is made of aluminium oxide.

6. Valve according to one of Claims 1 to 5, in which the valve seat (6) has an aluminium ring as parent body, which is pressed into the aluminium housing (5).

7. Use of valve according to one of Claims 1 to 6 as a gas recirculation valve of a motor vehicle.
